# EUROPEAN PATENT APPLICATION

(11) **EP 2 404 526 A1**
(43) Date of publication of application: **11.01.2012**
(21) Application number: 10187644.9
(22) Date of filing: 14.10.2010
(51) Int. Cl.: A47B 21/007, G06F 1/18, G06F 3/033

(54) **Structure of the waterproof tabletop for a touch-sensitive display**

(30) Priority: 06.07.2010 TW 099212887
(71) Applicant: Nlighten Trading (Shanghai) Co., Xu-Hai District Shanghai, 200233 (CN)
(72) Inventor: Shen, Hong, Coo Hejing Hi-Tech Park Shanghai (CN); Shen, Yi-Liang, Coo Hejing Hi-Tech Park Shanghai (CN); Feng, Ke-Qiang, Coo Hejing Hi-Tech Park Shanghai (CN); Wu, Xin-Min, Coo Hejing Hi-Tech Park Shanghai (CN); Lin, Chung-Ming, 333, Taoyuan County Taiwan 333 (CN)
(74) Representative: McCartney, Jonathan William

(57) **Abstract**

The present invention discloses the structure of a waterproof tabletop for a touch-sensitive display, which includes: a tempered glass containing an imaging part and a non-imaging part which are formed integrally; a film under the tempered glass corresponding to the imaging part and adhered to the tempered glass to form a projection screen; and a bracket adhered under the tempered glass to support the tempered glass.

## Description

### FIELD OF THE INVENTION

The present invention generally relates to a structure of the tabletop, and especially to a structure of the waterproof tabletop for the touch panel.

### BACKGROUND OF THE INVENTION

In pace with technology, the computer plays a very important and irreplaceable role in current world due to the efficiency and convenience what it brings. Common computer display devices which are well known in public includes a LCD (liquid crystal display), a PDP (Plasma Display Panel), or a CRT (cathode ray tube), and traditional computer input devices include keyboards and pointing devices. Users have to operate the computer through the input devices rather than operating or controlling through the display devices directly since the display devices and the input devices mentioned above are all independent and separated. However, this kind of operation method is very inconvenient and may be difficult for older or younger people. In order to overcome the aforementioned inconvenience and difficulties, a display of a touch panel which combines the display device and the input device is disclosed, wherein the input device is the touch panel which is the same as the display device. Users can watch the image or video on the display of the touch panel and touch the screen of the display to select an icon on the screen, followed by controlling the CPU of the computer to process the instruction. Such a novel operation method is brought to the world by the display of touch panel, moreover, it's much easier and more convenient to those older and younger. Besides, a tabletop embedded with the display of the touch panel is invented to facilitate the conference and study of multi-people.

However, the display of the touch panel is very delicate because it may be damaged by liquid, dust, force, or bump. Further, a conventional tabletop embedded with a touch panel display may not perfectly prevent liquid and dust from damaging the display.

Therefore, the present invention discloses a tabletop structure which may prevent liquid and particles effectively.

### SUMMARY OF THE INVENTION

The present invention relates to a structure of the tabletop, and especially to a structure of the waterproof tabletop for the touch panel. Because the display of the touch panel is delicate, it may be damaged by external factors such as liquid, dust, force, or bump. Furthermore, conventional tabletops embedded with a touch panel display cannot prevent liquid and dust perfectly. Therefore, the present invention discloses a structure of a tabletop which can prevent liquid and particles effectively.

The present invention discloses a waterproof tabletop structure for a touch panel including: a tempered glass layer having an imaging part and a non-imaging part which are formed integrally; a film configured (disposed) under the tempered glass corresponding to (i.e. in the region of) the imaging part and adhered to the tempered glass to form a projection screen; a bracket configured (disposed) under the tempered glass and adhered to the tempered glass to support the tempered glass.

One advantage of the present invention is that the tempered glass is formed integrally and may be inseparable from the bracket, therefore, there is no crack or hole (opening) around the structure of the waterproof tabletop for touch panel. Accordingly, the present invention can prevent damage from liquid and dust effectively.

One advantage of the present invention is that the antiglare material may be coated on the tempered glass to prevent the reflected images caused by light emitted from the environment.

One advantage is that the film may be a diffusion film so as to homogenize the image projected on the film and IR (infrared ray).

One advantage of the present invention is that the bracket may be formed integrally or composed by a plurality of components which are in simple geometric shapes and the tempered glass may be formed integrally so as to facilitate the processing and assembly. Thus, the manufacturing process of the present invention can be simplified, and the efficiency of the manufacturing process can be improved.

The present invention can be understood more clearly according to the description of an embodiment accompanying with the drawings and claims.

### BRIEF DESCRIPTION OF THE DRAWINGS

FIG. 1 shows an embodiment of the present invention.
FIG.2 shows an embodiment of the tempered glass of the present invention.
FIG.3 shows an embodiment of the bracket of the present invention.
FIG.3a shows another embodiment of the bracket of the present invention.
FIG. 4 shows an operating example of the present invention.

### DESCRIPTION OF THE PREFERRED EMBODIMENT

Some sample embodiments of the invention will now be described in greater detail. Nevertheless, it should be recognized that the present invention can be practiced in a wide range of other embodiments besides those explicitly described, and the scope of the present invention is expressly not limited except as specified in the accompanying claims.

The present invention generally relates to a structure of the tabletop, especially to a structure of the waterproof tabletop for the touch panel.

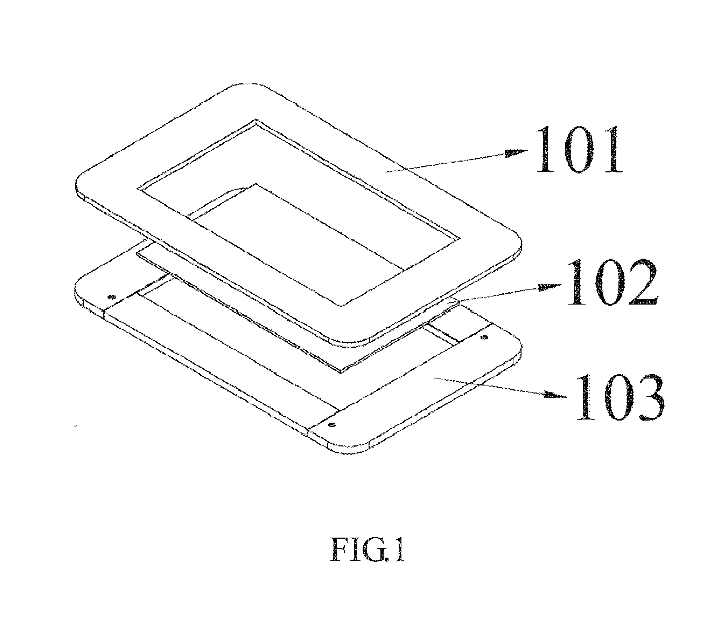

In an embodiment of the present invention, referred to FIG. 1, the waterproof tabletop for the touch panel disclosed in the present invention includes tempered glass 101, a film 102, and a bracket 103, wherein the film 102 and the bracket 103 are configured under the tempered glass 101 respectively and adhered to the tempered glass 101 inseparably.

In some embodiments of the present invention, the film 102 and the bracket 103 can be adhered to the tempered glass 101 by adhesives. The aforementioned adhesives may include, but are not limited to, natural adhesives( ex: glucose and adhesives of the derivatives thereof , or Protein adhesives), epoxy resin and modified epoxy resin adhesives, phenolic and modified phenolic resin adhesives, polyurethane adhesives, Polyisocyanate adhesives, blocked isocyanate adhesives, isocyanate-based prepolymer adhesives, water-based polyurethane, acrylic adhesives, α -cyanoacrylate adhesives, anaerobic adhesives, fast-curing acrylic adhesives, acrylic emulsion adhesives, acrylic pressure-sensitive adhesives, polyvinyl acetate emulsion adhesives, polyvinyl acetate solution, polyvinyl acetate hot melt adhesives, modified polyvinyl acetate copolymerization adhesives, ethylene-vinyl acetate copolymer adhesives, organic silicone adhesives, silicone rubber adhesives, heterocyclic polymer adhesives( ex: polybenzimidazole, polyimide and copolymers thereof, polyquinoxaline, or aromatic sulfone), or rubber adhesives( ex: neoprene, polysulfide rubber, butylbenzene rubber, or chlorosulfonated polyethylene). The method of adhesion may include, but is not limited to, opposite bonding, facade bonding, bevel bonding, or plane bonding.

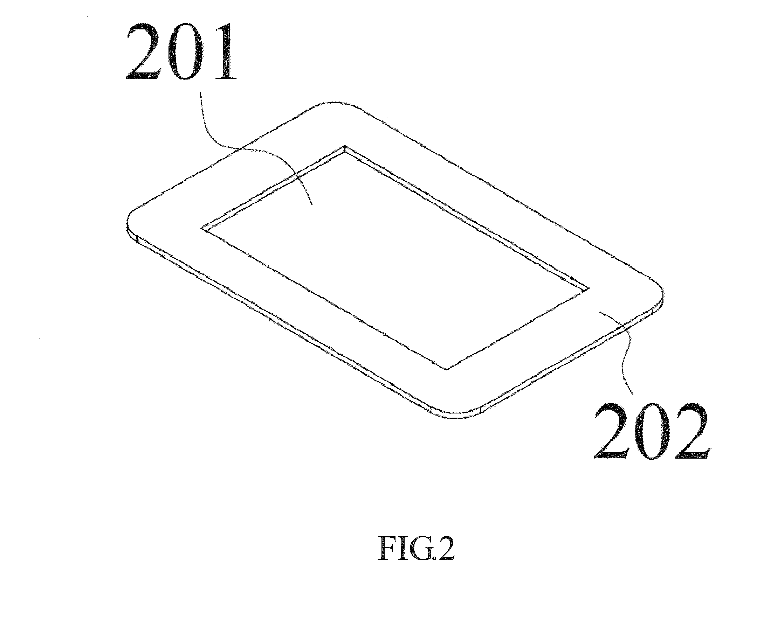

In an embodiment of the present invention, referred to FIG.2, the tempered glass 101 which includes an imaging part 201 and a non-imaging part 202 is formed integrally so as to prevent the existence of cracks and holes, whereby the film 102 can be protected against the liquid, dust, external force, and bump, wherein the imaging part 201 is transparent and coated by antiglare materials to prevent glare, and is configured at the center region of the tempered glass 101 such that users can see the images presented on the film 102. Aforementioned antiglare materials include, but are not limited to, a composite film which has a substrate of polyester film and a coating film formed on at least one surface of the substrate of polyester film, wherein aforementioned coating film is selected from the group consisting of polymers composed of hydroxypropylcellulose and poly(2-ethyl-2-oxazoline) and the combination thereof, surfactants, colloidal silica, and the crosslinking agent( ex: water-soluble titanium salt, and water-soluble or water-disperse organic crosslinking agent). The non-imaging part 202 which may be transparent or non-transparent is configured at the edge region of the tempered glass 101, and it can be printed with any patterns by stencil, such as trademark, product name, or personal label, etc.

In some embodiments of the present invention, the film 102 of which the shape and size are the same as the imaging part 201 is a diffusion film with a characteristic of homogenizing light for homogenizing the image and IR (infrared ray), and can be adhered to the imaging part 201 by aforementioned methods of adhesion to form a projection screen. Besides, the material of the diffusion film can be polymer resin which includes polyacrylate resin, polycarbonate, polystyrene, polyolefin, acetate cellulose, polyimide resin, polyester resin, and polyester resin is preferred, such as PET( Poly(ethylene terephthalate)) or PEN ( Poly (ethylene-2,6-naphthalate)).

In an embodiment of the bracket 103 disclosed in the present invention, referred to

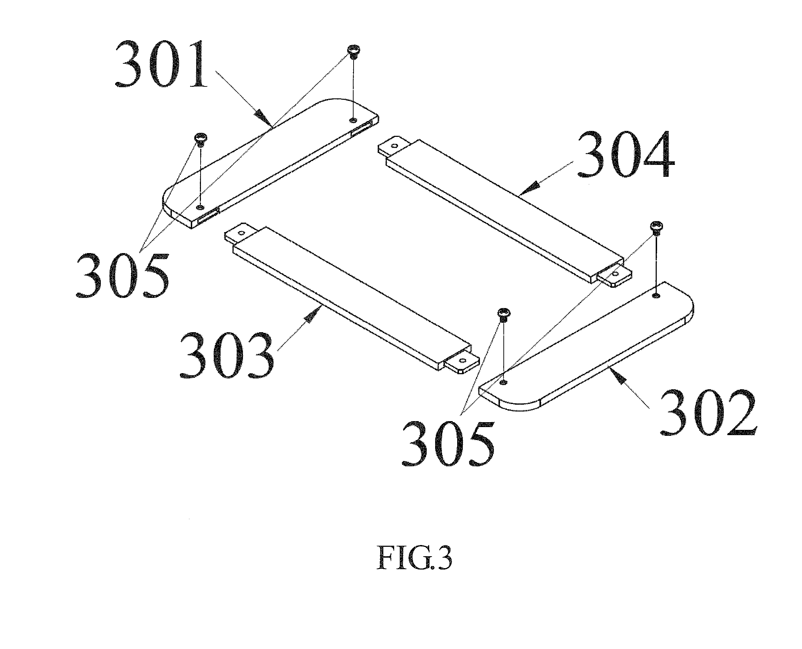

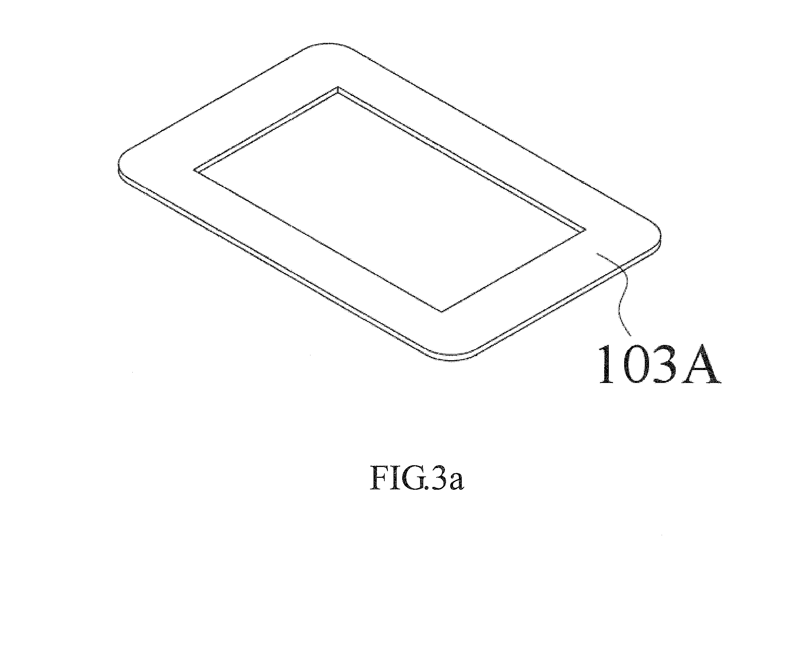

FIG.3, the bracket 103 can be composed of a plurality of components which includes an up brace 301, a down brace 302, a left brace 303, and a right brace 304, wherein each of the up brace 301 and the down brace 302 has two fillisters (or openings, or slots) formed on the inner surface thereof corresponding to the left brace 303 and the right brace 304 respectively, and a plurality of threaded holes are configured in the left brace 303 and the right brace 304 through the fillisters respectively such that a plurality of screws 305 which are compatible with the threaded holes can be screwed in the up brace 301 and the down brace 302 through fillisters. Each of the left brace 303 and the right brace 304 has two bulges (or projections, or protrusions) configured at opposite ends respectively so as to be capable of insertion into and being combined with corresponding fillisters exactly without cracks, and a plurality of threaded holes which are compatible with aforementioned threaded holes of the up brace 301 and the down brace 302 are configured in the bulges such that the screws 305 can be screwed in when the fillisters and the bulges combine, followed by the bracket 103 can be formed and fastened. Besides, in the embodiment, the bracket 103 of which the shape and the size are the same as the non-imaging part 202 can be adhered to the non-imaging part 202 by aforementioned method of adhesion so as to support the tempered glass 101.

In another embodiment of the bracket disclosed in the present invention, referred to FIG.3a, the bracket 103a of which the shape and the size are the same as the non-imaging part 202 is formed integrally and produced by removing the intermediate of a block material, and can be adhered to the non-imaging part 202 by aforementioned method of adhesion so as to support the tempered glass 101.

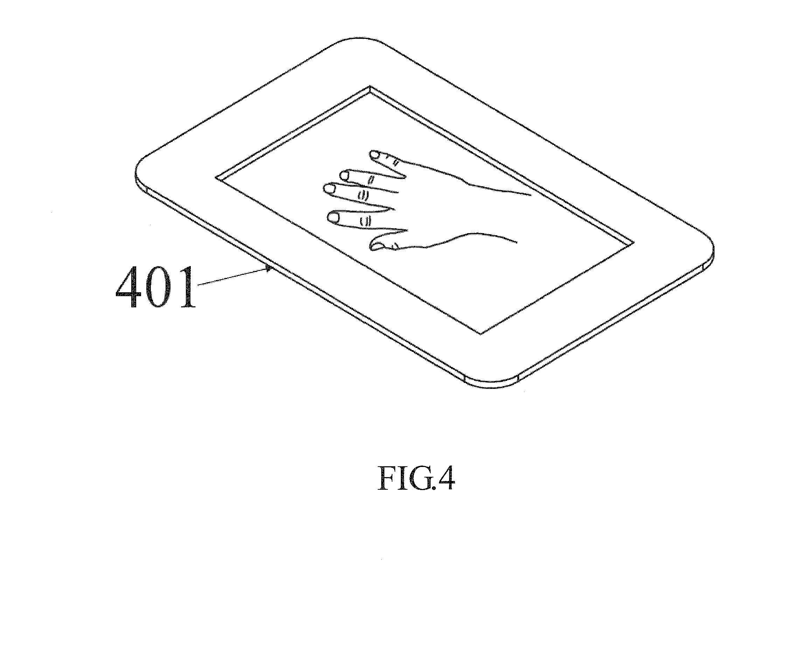

FIG. 4 shows an operating embodiment of the present invention. In the embodiment, users can touch the waterproof tabletop for the touch panel 401 for executing the operation and control. And because the waterproof tabletop for the touch panel 401 is formed integrally, it can prevent damage from liquid and dust such that users can operate and maintain more conveniently without worrying about the external factors such as liquid, dust, force, bump, etc.

When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example of the present invention. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments of the present invention, various features are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims are hereby expressly incorporated into this description, with each claim standing on its own as a separate embodiment of this invention.

## Claims

1. A structure of a waterproof tabletop for a touch panel, said structure **characterized by** comprising:
a tempered glass (101) containing an imaging part (201) and a non-imaging part (202) which are formed integrally;
a film (102) configured under said tempered glass (101) corresponding to said imaging part (201) and adhered to said tempered glass (101) to form a projection screen; and
a bracket (103) configured under said tempered glass (101) and adhered to said tempered glass (101) to support said tempered glass (101).

2. The structure according to claim 1, wherein said imaging part (201) is formed at the center region of said tempered glass (101), and said non-imaging part (202) is formed at the edge region of said tempered glass (101).

3. The structure according to claim 1 or 2, wherein said imaging part (201) is coated by antiglare materials.

4. The structure according to claim 3, wherein said antiglare materials includes a composite film which has a substrate of polyester film and a coating film formed on at least one surface of said substrate of polyester film, wherein said coating film is selected from the group consisting of hydroxypropylcellulose and poly(2-ethyl-2-oxazoline) and the combination thereof.

5. The structure according to any preceding claim, wherein said non-imaging part (202) is printed at least one pattern by stencil.

6. The structure according to any preceding claim, wherein said film (102) of which the shape and size are the same as said imaging part (201) is a diffusion film and adhered to said imaging part (201).

7. The structure according to claim 6, wherein said diffusion film includes polyacrylate resin, polycarbonate, polystyrene, polyolefine, cellulose acetate, polyimide resin, polyester resin, PET, and PEN.

8. The structure according to any preceding claim, wherein said bracket (103) of which the shape and the size are substantially the same as said non-imaging part (202) is formed integrally and is adhered to said non-imaging part (202).

9. The structure according to any preceding claim, wherein said bracket (103) of which the shape and the size are substantially the same as said non-imaging part (202) comprises a plurality of components and is adhered to said non-imaging part (202).

10. The structure according to claim 9, wherein said plurality of components comprise an up brace, a down brace, a left brace, a right brace, and a plurality of screws, wherein each of said up brace and said down brace has two fillisters formed on the inner surface of said up brace and said down brace corresponding to said left brace and said right brace respectively, and each of said left brace and said right brace has two bulges formed on the location corresponding to said fillisters for inserting said fillisters, and said bulges and said fillisters have a plurality of threaded holes formed correspondingly which can be screwed by said plurality of screws.
